# EUROPEAN PATENT SPECIFICATION

(11) **EP 4 587 254 B1**
(45) Date of publication and mention of the grant of the patent: **06.05.2026**
(21) Application number: 23783024.5
(22) Date of filing: 11.09.2023
(51) Int. Cl.: B29C 49/42, B29C 49/00, B29C 49/04, B29C 48/00, B29C 48/025, B29C 48/09, B29C 48/25, B29C 48/345, B29C 51/42, B29C 48/30, B29C 48/325

(54) **PARISON FORMING HEAD GROUP WITH VARIABLE INTERAXIAL DISTANCE**
VORFORMLINGFORMKOPFGRUPPE MIT VARIABLEM INTERAXIALEM ABSTAND
GROUPE DE TÊTE DE FORMATION DE PARAISON À DISTANCE INTERAXIALE VARIABLE

(30) Priority: 13.09.2022 IT 202200018726
(43) Date of publication of application: 23.07.2025
(73) Proprietor: Magic MP S.p.A., 20841 Carate Brianza (MB) (IT)
(72) Inventor: GIACOBBE FERLISI, Davide, 20841 Carate Brianza (MB) (IT)
(74) Representative: Raimondi, Margherita
(86) International application number: PCT/IB2023/058990
(87) International publication number: WO 2024/057177

(56) References cited:
- AT-B- 318 898
- BE-A- 708 614
- DE-A1- 1 704 855
- IT-A1- BO20 080 731
- KR-A- 20220 019 424
- US-A1- 2020 108 543

## Description

The present invention relates to a group for forming a plurality of tubular parisons made of plastic material for a blow-moulding machine, comprising at least a first and a second forming heads with a vertical axis for forming a respective parison and a group for adjusting the interaxial distance between the forming heads.

It is known in the technical sector of packaging liquid products and the like that there exists the need to produce plastic containers suitable for this purpose.

It is also known that said containers are formed in suitable blow-moulding machines provided with forming heads which are designed to dispense a respective tube of plastic material - known as a "parison". Each forming head is arranged above an associated blowing seat of a blowing mould, formed by two half-moulds displaceable between two different opening/closing positions for capturing/releasing the dispensed parisons which are blown inside the closed mould.

It is also known that in conventional blow-moulding machines with several heads for forming respective parisons said heads are arranged with a fixed interaxial distance between the dispensing axes of each head, while the blowing mould which arrives underneath the forming heads may have seats with an interaxial distance which is varied depending on the dimensions and/or shape of the final containers which are to be obtained.

In order to vary said interaxial distance it is therefore necessary to change the entire group of forming heads in order to adapt them to the different production format.

This results in a long machine downtime for allowing the necessary replacement operations, with a consequent reduction in the productivity and increase in both the final costs of the single containers and the general management costs.

In addition, it is necessary to maintain a storage facility which is always active and stocked with the different forming heads for the necessary replacement operations.

AT 318 898 and GB1336504A describe a multi-head extruder according to the preamble of claim 1 for use with a plurality of cavities in a mould, wherein the body of each extrusion head is mounted so as to rotate about an axis substantially coinciding with the longitudinal central line of a passage through which the plastic material is supplied to the body of each extrusion head, so that the distance between the centres of the dies of the extrusion heads may be adapted to the centres of these cavities of the mould by rotating the extrusion heads about said axis. In this known extruder, the body of each extrusion head is supported by an intermediate element mounted on the body of an extrusion press by means of a collar rigidly fixed to a body of the press. The aforementioned intermediate element is free to rotate, inside said collar, about the longitudinal central line of the passage through which the plastic material is supplied by the extruder and means are provided for adjusting the configuration of the extruder body and therefore the rotation position of the intermediate element inside the collar.

The known adjustment by means of rotation, while being effective for avoiding irregularities in the thickness of the parison, does not however provide satisfactory results as regards the adaptation to different shapes and sizes of the moulds. Further examples of machine known of the prior art and according to the preamble of claim 1 are known from IT BO2008 0731.

The technical problem which is posed therefore is that of providing forming heads for blow-moulding machines which are able to adapt to different shapes and sizes of the blowing moulds.

One particular object of the present invention is to allow a variation of the interaxial distance between the dispensing axes of the parison forming heads without the need for time-consuming replacement of the said heads when there is a variation in the shape and/or interaxial distance between the seats of the blowing mould during production.

These results are obtained according to the present invention by a forming group according to the features of Claim 1.

According to one aspect of the invention, the forming group for forming a plurality of tubular parisons made of plastic material for a blow-moulding machine comprises a fixed support, a first forming head and a second forming head, arranged alongside each other in a longitudinal direction, and a supply source for supplying the plastic material. Each forming head is configured to dispense a tubular parison made of plastic material along a respective vertical dispensing axis through a bottom dispensing mouth.

A movement assembly is configured to cause a relative movement of the forming heads in translation along the longitudinal direction so as to vary the interaxial distance between the dispensing axes of the forming heads. Connection means connect the plastic material supply source to a respective inlet for entry of the plastic material to be dispensed into the forming head and maintain the connection when there is a variation in the interaxial distance between the forming heads.

Therefore, it is possible to easily adjust the interaxial distance between the forming heads within a wide range, without having to disassemble the heads or interrupt the supply of plastic material. Format change-over and adjustment of the blow-moulding machine are therefore quick and easy to perform and the management of the blow-moulding machine does not require a storage facility for the different forming heads.

The connection means comprise a first duct communicating with the supply source, in particular with the common inlet, and a first compensator joint which connects the first duct to the inlet of the first head; and/or a second duct communicating with the supply source, in particular with the common inlet, and a second compensator joint which connects the second duct to the inlet of the second head.

The moulding group may comprise a reference block, which is fixed during use and which is arranged between the first and second forming heads and comprises said supply source for the plastic material, said first duct for supplying the material and said second duct for supplying the material. Each compensator joint is preferably configured to expand/retract when there is a variation of the relative position, in the longitudinal direction, between the respective forming head and the reference block, so as to maintain the connection between the plastic material supply source and the respective inlet of the forming head. Each compensator joint may in particular comprise a first element fixed to the reference block and a second element arranged at the inlet of the forming head and movable therewith in the longitudinal direction, one of said first and second elements comprising a sleeve and the other element comprising a bush, the sleeve being coaxially coupled sealingly with the bush so as to allow relative sliding while maintaining the fluid connection between the reference block and the inlet for entry of the material into the forming head.

In a preferred embodiment, the sleeve has a respective annular shoulder designed to create a gap with the respective bush, said gap arranged to be filled with material so as to create a seal designed to prevent leakage of the material from the compensator joint.

The forming group may preferably comprise a first flange and a second flange, which are supported on a longitudinal/transverse plane of the fixed support such as to allow a relative movement of the flanges which includes at least a movement of translation in the longitudinal direction; each of said flanges is moreover rigidly coupled in translation with a respective forming head.

Further details and advantageous aspects may be obtained from the following description of a non-limiting example of embodiment of the subject of the present invention, provided with reference to the accompanying drawings, in which:
Figure 1: shows an exploded perspective view of the forming head group according to the present invention;
Figure 2: shows an exploded perspective view of the group for varying the interaxial distance, arranged between the forming heads;
Figure 3: shows a perspective view of the group according to Fig. 2 in the partially assembled condition;
Figure 4: shows a perspective view of the group according to Fig. 2 installed so as to be connected to the two forming heads;
Figure 5: shows a cross-sectional view along a vertical plane of the device for varying the interaxial distance, connected to the heads and with gearing for transmission of the rotational movement;
Figure 6: shows a schematic cross-sectional view of the head group according to the invention during an increase of the interaxial distance and with connection compensator joints for supplying the extruded material to the heads;
Figure 7: shows a schematic cross-sectional view, on a larger scale. of the compensator joints in the extended condition for ensuring the continuity of the ducts for supplying the material to the forming heads;
Figure 8: shows a cross-sectional view of the head group according to the invention in the position where is a minimum interaxial distance between the heads, with the compensator joints in the retracted condition;
Figure 9: shows a cross-sectional view, on a larger scale, of the compensator joints according to Fig. 8; and

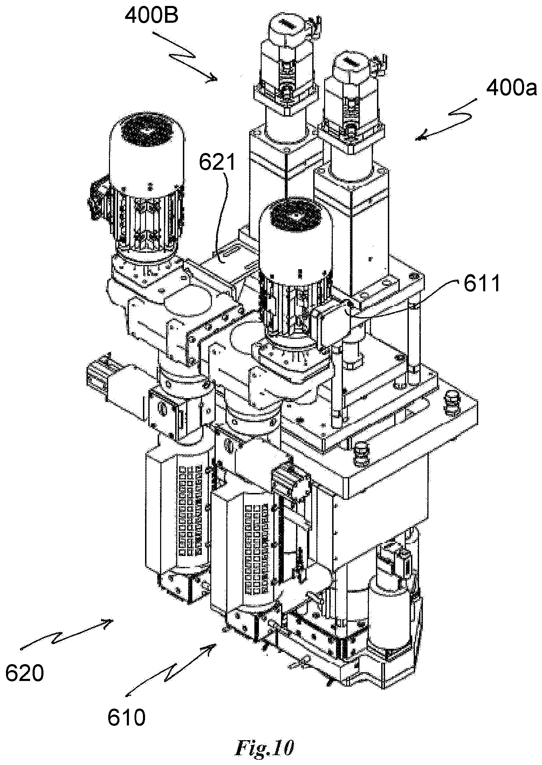

Figure 10: shows a perspective view of the head group according to the invention with the auxiliary heads for forming the level line of a container.

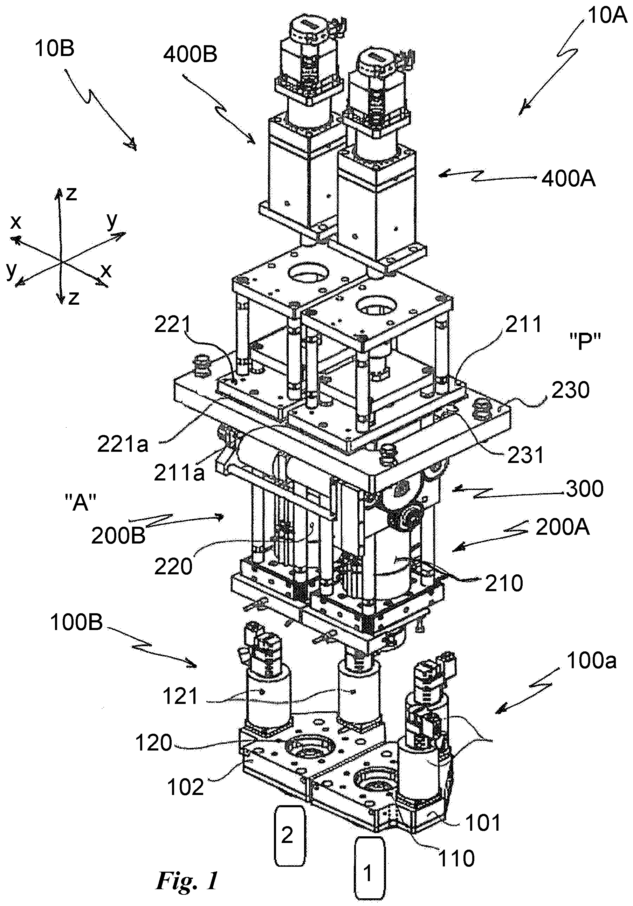

As shown in Fig. 1 and assuming solely for the sake of easier description and without a limiting meaning a set of three reference axes, respectively extending in a longitudinal direction X-X of width of the group and of translation of the forming heads towards/away from each other, transverse direction Y-Y depthwise of the group, and vertical direction Z-Z perpendicular to the other two directions and parallel to a vertical dispensing axis of each head, as well as a front part "A" and a rear part "P" opposite to the front part in the transverse direction, a preferred example of a head group with a variable interaxial distance according to the invention comprises a support plate 230 which is fixed during use, for example to a frame of the blow-moulding machine, and is provided with a hollow through-cavity in the vertical direction though which a first forming head 10A and a second forming head 10B are inserted, arranged alongside each other in the longitudinal direction X-X.

Each forming head 10A, 10B is mounted on a respective first flange 211 or second flange 221 of a pair of flanges, which are in turn supported on the plate 230 so as to allow a relative translation of the flanges 211, 212 in the longitudinal direction X-X. Preferably, each flange 211, 221 has sliders resting on the plate 230 and free to move in the longitudinal/transverse plane.

The internal cavity of the plate 230 has dimensions such as to prevent the flanges 211,221 from falling through, but allow a relative movement of the heads 10A, 10B in the longitudinal direction, as will emerge more clearly below.

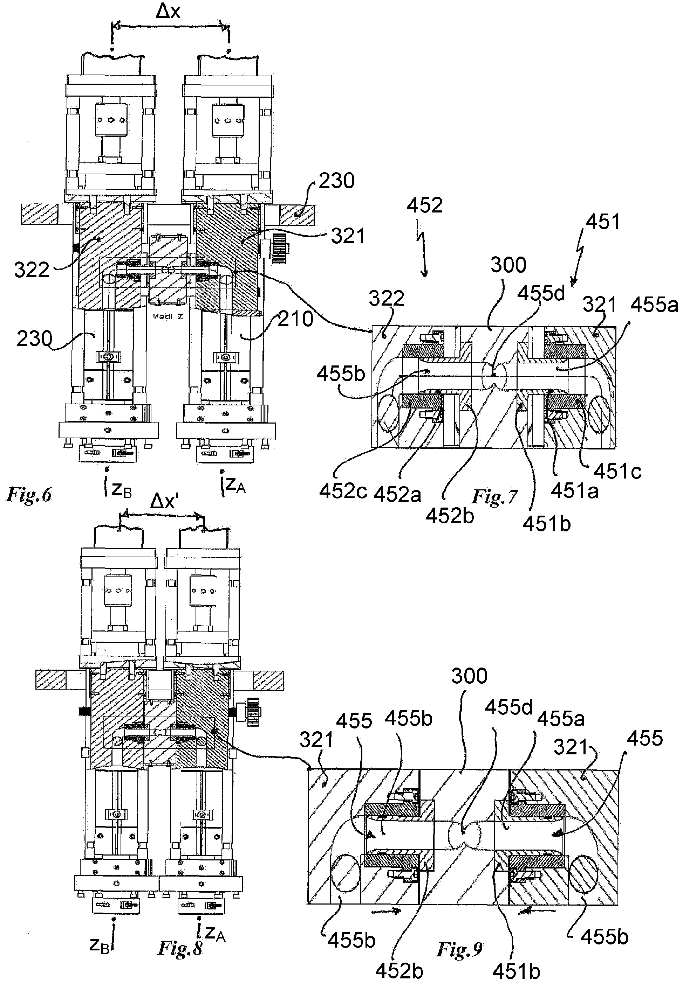

Each forming head 10A, 10B has (Fig. 1) a vertical dispensing axis Z_{A}, Z_{B} (Fig. 6) and a respective die group 100A, 100B for extruding a parison 1,2 through a bottom dispensing mouth.

A respective supply group 200A, 200B is connected to the die group 100A, 100B for supplying the plastic material to be dispensed in the form of parisons through the die group 100A, 100B.

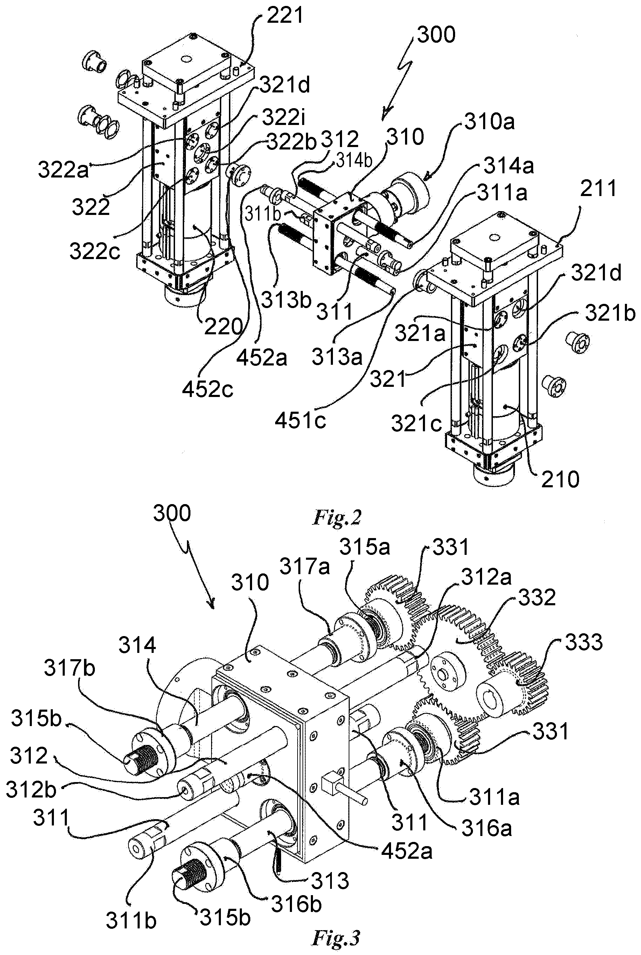

The first supply group 200A of the first head 10A comprises an inlet for the material to be dispensed, which is connected to a first vertical-axis distribution chamber 210 designed to supply the respective dispensing mouth of the first die group 100A, and the second supply group 200B comprises a respective inlet 322i for the fluid to be dispensed, which is connected to a second vertical-axis distribution chamber 220, which supplies the dispensing mouth of the second die group 100B. As shown more clearly in Fig. 2, each distribution chamber 210, 220 is integral in translation with a respective one of the first support flange 211 and the second support flange 221, by means of a respective first block 321 which is integral in translation with the first chamber 210 and first flange 211 or second block 322 integral with the second chamber 220 and the second flange 221.

The internal cavity of the plate 230 has dimensions such as to allow a relative displacement of the supply groups 200A, 200B in the longitudinal direction.

A group 300 for varying the interaxial distance is arranged between the two heads, in particular between the two supply groups 200A, 200B for displacement thereof in translation along a direction parallel to the longitudinal axis X-X in order to vary the distance in the longitudinal direction between the two heads 10A,10B and therefore between the dispensing axes Z_{A},Z_{B} of the heads 10A,10B.

The group 300 for varying the interaxial distance comprises in particular a movement assembly which is arranged and configured to move the forming heads 10A,10B in translation towards/away from each other in the longitudinal direction X-X, so as to vary the interaxial distance between the dispensing axes of the forming heads; and connection means which connect the plastic material supply inlet 310a to the inlet of the first head 10A and to the inlet of the second head 10B and are configured to maintain the connection upon variation of the interaxial distance between the forming heads 10A,10B.

In greater detail, according to preferred embodiments:
- The die groups 100A,100B comprise a respective first die-holder support 101 or second die-holder support 102, which are independent of each other and coupled to the respective distribution chamber so as to be fixed therewith for translation in the longitudinal direction X-X. Each die-holder support 101,102 has, arranged thereon, an associated female die 110,120; each die 110,120 defines the vertical-axis dispensing mouth which, during use, is coaxial with the vertical dispensing axis of the head. For this purpose, each die group 100A,100B may comprise an associated assembly of electric actuators 111,121 for adjusting centring of the respective die 110,220 on the dispensing axis of the head. Alternatively, the centring of the die may be performed using conventional technology with manual adjustment systems.

- According to conventional technology, a male element is inserted coaxially in each female die 110,120 and through the dispensing mouth so that, by varying a relative position in the vertical direction between the die 110,120 and male element, it is possible to adjust an opening of the dispensing mouth and therefore the thickness of the parison 1, 2 which is dispensed.
- A pair 400A,400B of electric actuators for causing an adjustment of the thickness of the parison of the respective head 10A,10A is mounted above the respective support flange 211,221 and is designed to actuate in the vertical direction either one of the male element and the die in order to vary the opening of the dispensing mouth, for example by means of a transmission chain acting on the die-holder support 101,102 which converts a rotational movement of the actuator 400A into a displacement in the vertical direction Z-Z of the die support or male element and therefore causes greater/lesser opening of the dispensing mouth in order to obtain variations in thickness of the body of the dispensed parison and therefore of the final container.

The die group 100A, the supply group 200A and, if present, the adjustment actuator 400A of each head are coaxially aligned in the vertical direction Z-Z and connected together to form overall a respective parison forming head 1,2 which can translate in both senses of the longitudinal direction X-X.

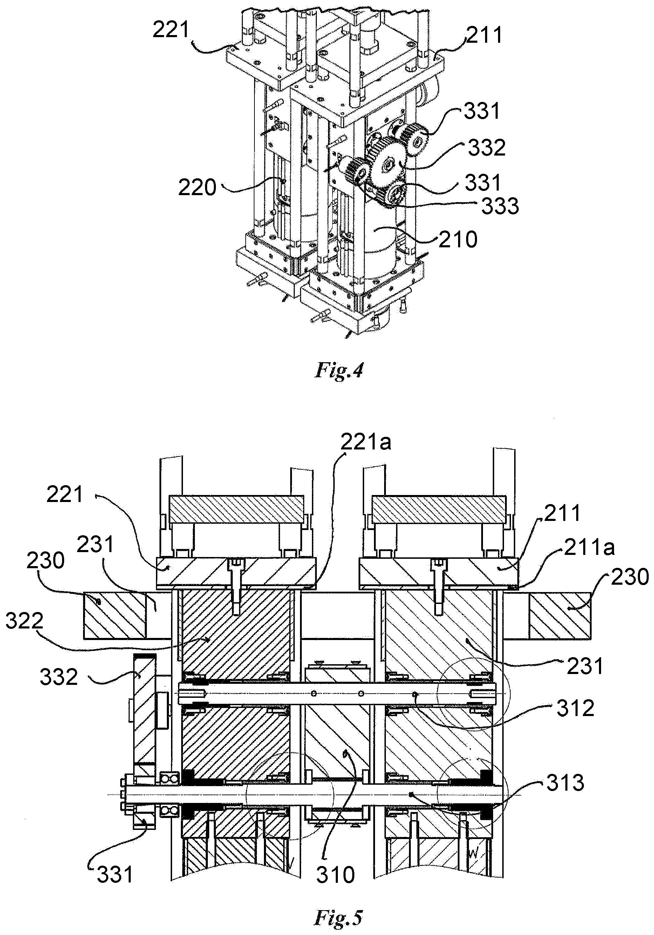

As shown in Figures 2-6, the group 300 for varying the interaxial distance comprises:
- a central reference block 310, which is fixed during use, in particular to the support 230; the fixed block 310 comprises a common inlet 310a for entry of the plastic material, which forms a supply source which supplies a first duct 455 for supplying the material, designed to be connected to the inlet of the first supply group 200A and a second duct 455 for supplying the material, designed to be connected to the inlet 322i of the second supply group 200B;
- a mover assembly for translating in both senses of the longitudinal direction the forming heads 10A,10B, configured to move the first and second supply groups 200A,200A and therefore the respective heads 10A,10B symmetrically towards/away from each other and with respect to the reference block 310 in the longitudinal direction X-X;
- a first compensator joint 451 (Fig. 7) which connects the first supply duct 455 to the inlet of the first supply group 200A and a second compensator joint 452 which connects the second supply duct 455 to the inlet 322i of the second supply group 200B. As will become clearer below, each joint is designed to expand/retract when there is a variation in the position of the supply groups 200A,200B in the longitudinal direction so as to maintain the connection between the common inlet 310a for the plastic material and the respective supply group 200A,200B.

The first and second ducts 455 and the first and second compensator joints 451,452 therefore form a preferred example of connection means for providing a connection between the common inlet 310a for the plastic material and the two forming heads 10A,10B, configured to maintain the fluid connection upon variation in the relative position of and therefore interaxial distance between the said heads 10A,10B.

In the preferred embodiment shown, the mover assembly comprises:
-- guiding means 311,312 for example comprising a first guiding and sliding bar 311 and a second guiding and sliding bar 312 which are fixed to the reference block 310 from which they project in both senses of the longitudinal direction; the respective opposite ends 311a,311b; 312a,312b of each guiding bar 311,312 are inserted inside corresponding holes 321a,321b;322a,322b of the first block 321 integral with the first chamber 231 and of the second block 322 integral with the second chamber 220. According to a preferred embodiment, the two guiding bars 311,312 are arranged opposite each other along a first diagonal of the block 300;
-- driven rotating means 313,314 coupled to the first and second blocks 321,322 of the first and second heads so that the rotational movement of the driven means causes a movement of the said blocks 321,322 and therefore of the forming heads 10A,10B towards/away from each other in the longitudinal direction X-X;
-- a drive element, in the example consisting of a drive gearing 333 connected to a reduction gear for generating the rotational movement, not shown;
-- a transmission mechanism 331,332 for transmitting the movement from the drive element to the driven means.

Preferably, said driven means include a first longitudinal shaft 313 and a second longitudinal shaft 314 which are respectively inserted with the possibility of rotating through the reference block 310 and inside corresponding through-holes 321a;321d of the first block 321, from which they emerge axially in the longitudinal direction X-X and inside corresponding through-holes 322c,322d of the second block 322.

The respective opposite ends 313a,313b;314a,314b of each driven shaft have a respective thread 315a,315b with a thread direction opposite to that of the thread at the other end, said threads being designed to cooperate with respective bushes 316a,316b;317a,317b with a female thread which are fixed to the first block 321 and to the second block 322 integral with the chambers 210,220, so that rotation of the shafts causes the symmetrical displacement in opposite senses along the longitudinal direction of the first and second supply group 200A,200B.

According to a preferred embodiment, the two threaded shafts are arranged opposite each other along a second diagonal of the block 310.

The transmission mechanism of the preferred example comprises a respective pinion 331 which is mounted on said ends 313a,314a of the shafts 313,314 projecting from the first block 321 and which meshes with an idle gear 332 designed to transmit a rotational movement to the driven shafts and to synchronize the rotation of the two driven shafts 313,314.

In particular, the central idle gear 332 in turn meshes with the driving gear 333, rotational operation of which causes the rotation of the driven shafts. As shown in Figs. 6-9, the group for varying the interaxial distance between the forming heads comprises the first compensator joint 451 and the second compensator joint 452, which are respectively arranged between the reference block 310 and the first block 321 of the supply group 200A of the first head and the second block 322 of the supply group of the second head 10B.

In detail, the first block 321 has the inlet for entry of the plastic material in the first supply group 200A, which is connected to the associated distribution chamber 210.

A bush 451c of the first joint 451 is arranged at the material inlet in the first block 321 of the first supply group 200A. The first compensator joint 451 comprises a sleeve 451a projecting in the longitudinal direction from the reference block 310, connected to the first duct 455 and coaxially coupled sealingly with the bush 451c so as to allow the relative displacement of sleeve and bush 451, while maintaining the fluid connection between the first duct 455 of the central block 310 and the inlet for material in the first block 321.

In a similar manner, the second block 322 has an inlet 322i for entry of the plastic material in the second supply group 200B, which is connected to the associated distribution chamber 220 in which a bush 452c with a longitudinal axis is inserted. The second compensator joint 452 comprises a sleeve 451a projecting in the longitudinal direction from the reference block 310 and coaxially coupled sealingly with the bush 452c so as to allow the relative displacement of sleeve 452a and bush 452c.

It will be clear to the person skilled in the art that different configurations of the compensator joint are possible, comprising an element fixed to the block 310 and a second element fixed to the forming head and movable therewith, the two elements being coaxially coupled so as to expand/retract the joint when there is a variation in the distance between the reference block 310 and the head. For example, a reverse arrangement of the joint is possible, with a bush fixed to the block 310 and a projecting sleeve, movable with the respective forming head.

In the example shown, each sleeve is provided with an annular head 451a,452b fixed to the central block 310 in the region of the respective supply duct 455.

According to a preferred embodiment, each sleeve 451a,452a has a respective annular shoulder 451b,452b designed to create a gap with the respective bush 451c,452c, said gap being filled with extruded material so as to create a seal designed to prevent dispersion of the material from the compensation joint 451,452.

The block 310 and the joints 451,452 (Fig. 7,9) are therefore crossed by a respective longitudinal connection duct 455a, which is connected to the inlet 322i of the respective head and which supplies a duct 455b for supplying the extruded material to the respective distribution chamber and therefore to the die 110,120 for expelling the parison.

The first and second ducts 45a are supplied via a central forked junction 455d which is connected to the common inlet 310a for the extruded material in the reference block 310.

As shown in the perspective view of Fig, 10 relating to a further variation of embodiment of the forming head group according to the invention, said group comprises a pair of auxiliary heads 610,620 for forming the level line of container, the auxiliary heads are mounted on the supports of the parison thickness adjustment motors 410,420 by means of connection means 611,621 of the conventional type.

With this configuration the operating principle of the group of heads with a variable interaxial distance is as follows:
- a first interaxial distance Δx is established (Fig. 6) between the dispensing axes Z_{A},Z_{B} of the heads 10A,10B, corresponding to that of the seats of the blowing mould during production;
- the driving gear 333 is operated in one direction or the other in so as to rotate the two pinions 331,333 which are synchronized by the central gear 332;
- said operation causes the rotation of the two driven shafts 313,314 which, rotating, act with the respective different end threads on the respective corresponding bushes of the two blocks 321,322 integral with the chambers 210,220, causing the sliding of the said blocks in opposite directions, said blocks, depending on the direction of rotation, moving towards or away from each other in the longitudinal direction X-X until the relative distance Δx to be obtained between the two heads 10A,10B is reached;
- the displacement of the two blocks 321,322 causes the simultaneous sliding of the sleeves 451c,452c in the respective bush 451a,452a, expanding or retracting the joint 451,452 and maintaining the continuity of the respective duct 455 for supplying the material to the heads 10A,10B;
- the material, entering via the central inlet 452a, is distributed inside the two supply ducts 455n and, by means of the joints 451,452, reaches the supply groups 200A,200B which supply the dies for formation of the two parisons 1 and 2.

When there is a variation in the interaxial distance between the seats of the mould, the aforementioned sequence is repeated, adjusting the rotation of the control gear 333, the rotation of which will cause the two heads to move towards or away from each other, in a manner corresponding to a new interaxial distance Δx' (Fig.8) determined by the new conditions set by the mould.

If required, supplying of the material to the common inlet 310a may be interrupted during the variation in the position of the heads 10A, 10B; this, however, is not strictly necessarily, owing to the presence of the group 300 for varying the interaxial distance which does not require an interruption of the connection.

It is therefore clear how the assembly of heads with a variable interaxial distance according to the invention is able to ensure a rapid and precise variation of the position of the two parison forming heads, by varying the interaxial distance between the associated dispensing axes in a manner corresponding to a variation of the interaxial distance between the seats of the blowing mould.

This variation does not require a prolonged downtime for replacement of the heads, thereby increasing the productivity thereof and reducing the costs of the finished containers.

Although described in connection with a number of embodiments and a number of preferred examples of implementation of the invention, it is understood that the scope of protection of the present patent is determined solely by the claims below.

## Claims

1. Forming group for forming a plurality of tubular parisons made of plastic material for a blow-moulding machine, comprising:
a support (230), fixed during use;
a first forming head (10A) and a second forming head (10B) mounted on the support (230) in a position alongside each other in a longitudinal direction (X-X);
wherein each forming head (10A,10B) is configured to dispense a tubular parison (1,2) made of plastic material along a respective vertical dispensing axis through a bottom dispensing mouth and comprises a respective inlet (322i) for entry of the plastic material to be dispensed into the forming head (10A,10B);
a supply source for supplying the plastic material, in particular a common inlet (310a) for supplying the plastic material;
a mover assembly, arranged and configured to move the forming heads (10A,10B) in translation towards/away from each other in the longitudinal direction (X-X) so as to vary the interaxial distance between the dispensing axes of the forming heads; and
connection means which connect the plastic material supply source (310a) to the inlet of the first head (10A) and to the inlet of the second head (10B) and which are configured to maintain the connection upon variation of the interaxial distance between the forming heads (10A,10B). **characterized in that** the connection means comprise:
a first duct (455) communicating with the supply source, in particular with the common inlet (310a), a first compensator joint (451) which connects the first duct (455) to the inlet of the first head (10A) and is configured to expand/retract upon variation of the interaxial distance between the dispensing axes of the forming heads, so as to maintain the connection between the plastic material supply source (310a) and the respective inlet of the forming head (10A, 10B); and/or
a second duct (455) communicating with the supply source, in particular with the common inlet (310a), a second compensator joint (452) which connects the second duct (455) to the inlet of the second head (10A) and is configured to expand/retract upon variation of the interaxial distance between the dispensing axes of the forming heads, so as to maintain the connection between the plastic material supply source (310a) and the respective inlet of the forming head (10A, 10B).

2. Forming group according to Claim 1, **characterized in that** it comprises a reference block (310), which is fixed during use, in particular to the support (230), and which is arranged between the first and second forming heads and includes said plastic material supply source (310a), said first duct (455) for supplying the material and said second duct (455) for supplying the material.

3. Forming group according to Claim 2, **characterized in that** each compensator joint (451,452) is configured to expand/retract upon variation of the relative position in the longitudinal direction between the respective forming head (10A,10B) and the reference block so as to maintain the connection between the plastic material supply source (310a) and the respective inlet of the forming head (10A,10B).

4. Forming group according to the preceding claim, wherein each compensator joint (451) comprises a first element fixed to the reference block (310) and a second element arranged at the inlet (322i) of the forming head and movable therewith in the longitudinal direction, one of said first and second elements comprising a sleeve (451a) and the other element comprising a bush (451c), the sleeve being coaxially coupled sealingly with the bush (451c) so as to allow relative displacement thereof while maintaining the fluid connection between the reference block (310) and the inlet for entry of the material in the forming head.

5. Forming group according to the preceding claim, wherein each sleeve (451a,452a) has a respective annular shoulder (451b,452b) designed to create a gap with the respective bush (451c,452c), said gap being designed to be filled with material to create a seal for preventing leakage of the material from the compensator joint (451,452).

6. Forming group according to one of the preceding claims, **characterized in that** each forming head (10A, 10B) includes a respective supply group (200A; 200B), comprising a respective block (321; 322) which has the respective inlet for the material, translating integrally with and connected to a distribution chamber (210) designed to supply the plastic material to the respective dispensing mouth of the forming head.

7. Forming group according to one of the preceding claims, **characterized in that** it comprises a first flange (211) and a second flange (221) which are supported on a longitudinal/transverse plane of the fixed support (230) so as to allow a relative translation of the flanges (211;221) in the longitudinal direction (X-X), and **in that** each of said flanges (211;221) translates integrally with a respective forming head, in particular with a respective block (311,321) of the supply group of the forming head.

8. Forming group according to the preceding claim, wherein the fixed support is in the form of a plate (230) having an internal cavity passing through in the vertical direction, with an upper plate surface which defines said longitudinal/transverse plane, and wherein each flange (211,221) has sliders resting on the plate (230) and free to move in the longitudinal/transverse plane.

9. Forming group according to one of the preceding claims, **characterized in that** the movement assembly comprises:
-- driven rotating means (313,314) coupled to the first forming head and to the second forming head, in particular to the first and second blocks (321,322) of the first and second heads, such that the rotational movement of the driven means causes a movement in the longitudinal direction of the forming heads (10A,10B) with respect to the fixed support, towards/away from each other in the longitudinal direction;
-- a drive element, preferably consisting of a driving gear (333), designed to be connected to a drive system for generating a rotational movement;
-- a transmission mechanism (331,332) for transmitting the movement from the drive element to the driven means.

10. Forming group according to one of the preceding claims, **characterized in that** said driven means include a first longitudinal shaft (313) and a second longitudinal shaft (314), the opposite ends (313a,313b;314a,314b) of each shaft having a respective thread (315a,315b) with opposite thread direction to the thread of the other end, said threads being designed to cooperate with respective female threads fixed to the first block (321) and to the second block (322), so that rotation of the shafts causes a symmetrical translation of the first and second heads (10A,10B), in opposite senses along the longitudinal direction.

11. Forming group according to the preceding claim, when dependent on Claim 3, wherein the driven shafts are inserted through the reference block (310) so as to be axially fixed but allowed to rotate with respect thereto; wherein, preferably, the two driven shafts are arranged opposite each other along a diagonal of the reference block (310).

12. Forming group according to the preceding claim, wherein the transmission mechanism comprises a respective pinion (331) mounted on a respective end (313a,314a) of the driven shafts (313, 314) and an idle gear (332) which meshes with the pinions (331) and with the drive element so as to transmit the rotational movement from the drive element to the driven shafts and synchronize the rotation of the two driven shafts (313,314).

13. Forming group according to one of Claims 9 to 12, wherein the movement assembly further includes guiding means (311,312) for guiding the displacement of the forming heads (10A,10B), in particular of the blocks (321;322) of the forming heads, preferably comprising a first sliding and guiding bar (311) and a second sliding and guiding bar (312), fixed to the reference block (310) from which they project in both senses of the longitudinal direction; the respective opposite ends (311a,311b;312a,312b) of each guiding bar (311,312) being inserted inside corresponding holes (321a,321b;322a,322b) of the first head, in particular of the first block (321), and of the second head, in particular of the second block (322), respectively.

14. Forming group according to one of the preceding claims, wherein each forming head comprises a respective die group (100A,100B), with a respective female die (110,120) which defines the dispensing mouth, wherein a male element is coaxially inserted inside each die (110,120) and through the dispensing mouth so that, by varying a relative position in the vertical direction between the die (110,120) and the male element, the opening of the dispensing mouth and therefore the thickness of the dispensed parison (1,2) is adjusted.

15. Forming group according to the preceding claim, wherein a respective electric actuator (400A,400B) designed to perform an adjustment of the thickness of the parison of the respective forming head (10A,10B) is supported by the respective support flange (211,221) and arranged so as to displaceably actuate in the vertical direction either the male element or the die in order to vary the opening of the dispensing mouth.

## Patentansprüche

1. Formgruppe zum Formen einer Vielzahl schlauchförmiger Vorformlinge aus Kunststoffmaterial für eine Blasformmaschine, umfassend:
einen Träger (230), der während der Verwendung fest ist;
einen ersten Formkopf (10A) und einen zweiten Formkopf (10B), die auf dem Träger (230) in einer Position nebeneinander in einer Längsrichtung (X-X) montiert sind;
wobei jeder Formkopf (10A, 10B) dazu konfiguriert ist, einen schlauchförmigen Vorformling (1, 2) aus Kunststoffmaterial entlang einer jeweiligen vertikalen Ausstoßachse durch eine untere Ausstoßmündung auszugeben und jeweils einen Einlass (322i) für den Eintritt des in den Formkopf (10A, 10B) auszugebenden Kunststoffmaterials umfasst;
eine Versorgungsquelle zum Zuführen des Kunststoffmaterials, insbesondere einen gemeinsamen Einlass (310a) zum Zuführen des Kunststoffmaterials;
eine Bewegungseinheit, die angeordnet und konfiguriert ist, die Formköpfe (10A, 10B) in Translation zueinander hin/voneinander weg in der Längsrichtung (X-X) zu bewegen, um den Achsabstand zwischen den Ausstoßachsen der Formköpfe zu variieren; und
Verbindungsmittel, welche die Kunststoffmaterial-Versorgungsquelle (310a) mit dem Einlass des ersten Kopfes (10A) und mit dem Einlass des zweiten Kopfes (10B) verbinden und die dazu konfiguriert sind, die Verbindung bei Variation des Achsabstands zwischen den Formköpfen (10A, 10B) aufrechtzuerhalten,
**dadurch gekennzeichnet, dass** die Verbindungsmittel umfassen:
eine erste Leitung (455), die mit der Versorgungsquelle, insbesondere mit dem gemeinsamen Einlass (310a), in Verbindung steht, ein erstes Kompensatorgelenk (451), das die erste Leitung (455) mit dem Einlass des ersten Kopfes (10A) verbindet und dazu konfiguriert ist, sich bei Variation des Achsabstands zwischen den Ausstoßachsen der Formköpfe zu erweitern/zurückzuziehen, um die Verbindung zwischen der Kunststoffmaterial-Versorgungsquelle (310a) und dem jeweiligen Einlass des Formkopfes (10A, 10B) aufrechtzuerhalten; und/oder
eine zweite Leitung (455), die mit der Versorgungsquelle, insbesondere mit dem gemeinsamen Einlass (310a), in Verbindung steht, ein zweites Kompensatorgelenk (452), das die zweite Leitung (455) mit dem Einlass des zweiten Kopfes (10B) verbindet und dazu konfiguriert ist, sich bei Variation des Achsabstands zwischen den Ausstoßachsen der Formköpfe zu erweitern/zurückzuziehen, um die Verbindung zwischen der Kunststoffmaterial-Versorgungsquelle (310a) und dem jeweiligen Einlass des Formkopfes (10A, 10B) aufrechtzuerhalten.

2. Formgruppe nach Anspruch 1, **dadurch gekennzeichnet, dass** sie einen Referenzblock (310) umfasst, der während der Verwendung fest ist, insbesondere am Träger (230), und der zwischen dem ersten und zweiten Formkopf angeordnet ist und die Kunststoffmaterial-Versorgungsquelle (310a), die erste Leitung (455) zum Zuführen des Materials und die zweite Leitung (455) zum Zuführen des Materials umfasst.

3. Formgruppe nach Anspruch 2, **dadurch gekennzeichnet, dass** jedes Kompensatorgelenk (451, 452) dazu konfiguriert ist, sich bei Variation der relativen Position in Längsrichtung zwischen dem jeweiligen Formkopf (10A, 10B) und dem Referenzblock zu erweitern/zurückzuziehen, um die Verbindung zwischen der Kunststoffmaterial-Versorgungsquelle (310a) und dem jeweiligen Einlass des Formkopfes (10A, 10B) aufrechtzuerhalten.

4. Formgruppe nach dem vorstehenden Anspruch, wobei jedes Kompensatorgelenk (451) ein erstes Element umfasst, das am Referenzblock (310) befestigt ist, und ein zweites Element, das am Einlass (322i) des Formkopfes angeordnet ist und sich zusammen mit diesem in Längsrichtung bewegt, wobei eines der ersten und zweiten Elemente eine Hülse (451a) umfasst und das andere Element eine Buchse (451c) umfasst, wobei die Hülse koaxial dichtend mit der Buchse (451c) gekoppelt ist, um eine relative Verschiebung derselben zu ermöglichen, während die Fluidverbindung zwischen dem Referenzblock (310) und dem Einlass für den Eintritt des Materials in den Formkopf aufrechterhalten wird.

5. Formgruppe nach dem vorstehenden Anspruch, wobei jede Hülse (451a, 452a) einen jeweiligen ringförmigen Absatz (451b, 452b) aufweist, der dafür ausgelegt ist, einen Spalt mit der jeweiligen Buchse (451c, 452c) zu erzeugen, wobei der Spalt dafür ausgelegt ist, mit Material gefüllt zu werden, um eine Dichtung zu erzeugen, die ein Austreten des Materials aus dem Kompensatorgelenk (451, 452) verhindert.

6. Formgruppe nach einem der vorstehenden Ansprüche, **dadurch gekennzeichnet, dass** jeder Formkopf (10A, 10B) eine jeweilige Versorgungsgruppe (200A; 200B) umfasst, die einen jeweiligen Block (321; 322) umfasst, der den jeweiligen Einlass für das Material aufweist, integralerweise mit einer Verteilkammer (210) translatiert und mit dieser verbunden ist, wobei die Verteilkammer dafür ausgelegt ist, das Kunststoffmaterial der jeweiligen Ausstoßmündung des Formkopfes zuzuführen.

7. Formgruppe nach einem der vorstehenden Ansprüche, **dadurch gekennzeichnet, dass** sie einen ersten Flansch (211) und einen zweiten Flansch (221) umfasst, die auf einer Längs-/Querebene des festen Trägers (230) gelagert sind, um eine relative Translation der Flansche (211; 221) in der Längsrichtung (X-X) zu ermöglichen, und dass jeder der Flansche (211; 221) integralerweise mit einem jeweiligen Formkopf translatiert, insbesondere mit einem jeweiligen Block (321,322) der Versorgungsgruppe des Formkopfes.

8. Formgruppe nach dem vorstehenden Anspruch, wobei der feste Träger in Form einer Platte (230) ausgebildet ist, die eine innere Kavität aufweist, die in vertikaler Richtung durchgehend ist, mit einer oberen Plattenoberfläche, die die Längs-/Querebene definiert, und wobei jeder Flansch (211, 221) Schlitten aufweist, die auf der Platte (230) aufliegen und frei sind, sich in der Längs-/Querebene zu bewegen.

9. Formgruppe nach einem der vorstehenden Ansprüche, **dadurch gekennzeichnet, dass** die Bewegungseinheit umfasst:
angetriebene rotierende Mittel (313, 314), die mit dem ersten Formkopf und dem zweiten Formkopf gekoppelt sind, insbesondere mit den ersten und zweiten Blöcken (321, 322) des ersten und zweiten Kopfes, derart, dass die Rotationsbewegung der angetriebenen Mittel eine Bewegung der Formköpfe (10A, 10B) in Längsrichtung relativ zum festen Träger bewirkt, zueinander hin/voneinander weg in der Längsrichtung;
ein Antriebselement, vorzugsweise bestehend aus einem Antriebszahnrad (333), das dafür ausgelegt ist, mit einem Antriebssystem verbunden zu werden, um eine Rotationsbewegung zu erzeugen;
einen Übertragungsmechanismus (331, 332) zum Übertragen der Bewegung vom Antriebselement auf die angetriebenen Mittel.

10. Formgruppe nach einem der vorstehenden Ansprüche, **dadurch gekennzeichnet, dass** die angetriebenen Mittel eine erste Längswelle (313) und eine zweite Längswelle (314) umfassen, wobei die gegenüberliegenden Enden (313a, 313b; 314a, 314b) jeder Welle jeweils ein Gewinde (315a, 315b) mit entgegengesetzter Gewinderichtung zu dem Gewinde des anderen Endes aufweisen, wobei diese Gewinde dafür ausgelegt sind, mit jeweiligen Innengewinden zusammenzuarbeiten, die am ersten Block (321) und am zweiten Block (322) befestigt sind, so dass die Rotation der Wellen eine symmetrische Translation der ersten und zweiten Köpfe (10A, 10B) in entgegengesetzten Richtungen entlang der Längsrichtung bewirkt.

11. Formgruppe nach dem vorstehenden Anspruch, wenn abhängig von Anspruch 3, wobei die angetriebenen Wellen durch den Referenzblock (310) hindurch eingeführt sind, so dass sie axial festgelegt, jedoch relativ hierzu drehbar sind; wobei vorzugsweise die zwei angetriebenen Wellen einander gegenüberliegend entlang einer Diagonalen des Referenzblocks (310) angeordnet sind.

12. Formgruppe nach dem vorstehenden Anspruch, wobei der Übertragungsmechanismus ein jeweiliges Ritzel (331) umfasst, das an einem jeweiligen Ende (313a, 314a) der angetriebenen Wellen (313, 314) montiert ist, und ein Leerlaufrad (332), das mit den Ritzeln (331) und mit dem Antriebselement kämmt, um die Rotationsbewegung vom Antriebselement auf die angetriebenen Wellen zu übertragen und die Rotation der zwei angetriebenen Wellen (313, 314) zu synchronisieren.

13. Formgruppe nach einem der Ansprüche 9 bis 12, wobei die Bewegungseinheit ferner Führungseinrichtungen (311, 312) zum Führen der Verschiebung der Formköpfe (10A, 10B), insbesondere der Blöcke (321; 322) der Formköpfe, umfasst, vorzugsweise umfassend eine erste Gleit- und Führungsstange (311) und eine zweite Gleit- und Führungsstange (312), die am Referenzblock (310) befestigt sind, von dem sie in beiden Richtungen der Längsrichtung hervorstehen; wobei die jeweiligen gegenüberliegenden Enden (311a, 311b; 312a, 312b) jeder Führungsstange (311, 312) in entsprechende Bohrungen (321a, 321b; 322a, 322b) des ersten Kopfes, insbesondere des ersten Blocks (321), bzw. des zweiten Kopfes, insbesondere des zweiten Blocks (322), eingesetzt sind.

14. Formgruppe nach einem der vorstehenden Ansprüche, wobei jeder Formkopf eine jeweilige Düsengruppe (100A, 100B) umfasst, mit einer jeweiligen Matrize (110, 120), die die Ausstoßmündung definiert, wobei ein männliches Element koaxial in jede Matrize (110, 120) und durch die Ausstoßmündung eingeführt ist, so dass durch Variieren einer relativen Position in vertikaler Richtung zwischen der Matrize (110, 120) und dem männlichen Element die Öffnung der Ausstoßmündung und damit die Dicke des ausgegebenen Vorformlings (1, 2) eingestellt wird.

15. Formgruppe nach dem vorstehenden Anspruch, wobei ein jeweiliger elektrischer Aktuator (400A, 400B), der dafür ausgelegt ist, eine Einstellung der Dicke des Vorformlings des jeweiligen Formkopfes (10A, 10B) vorzunehmen, von dem jeweiligen Stützflansch (211, 221) getragen ist und so angeordnet ist, dass er entweder das männliche Element oder die Matrize in vertikaler Richtung verschiebbar betätigt, um die Öffnung der Ausstoßmündung zu variieren.

## Revendications

1. Groupe de formage pour former une pluralité de paraisons tubulaires en matière plastique pour une machine de moulage par soufflage, comprenant :
un support (230), fixé pendant l'utilisation;
une première tête de formage (10A) et une deuxième tête de formage (10B) montées sur le support (230) dans une position l'une à côté de l'autre dans une direction longitudinale (X-X);
dans lequel chaque tête de formage (10A, 10B) est configurée pour distribuer une paraison tubulaire (1,2) en matière plastique le long d'un axe de distribution vertical respectif à travers une ouverture de distribution inférieure et comprend une entrée respective (322i) pour l'entrée de la matière plastique à distribuer dans la tête de formage (10A, 10B);
une source d'alimentation pour fournir la matière plastique, en particulier une entrée commune (310a) pour fournir la matière plastique;
un ensemble de déplacement, agencé et configuré pour déplacer les têtes de formage (10A, 10B) en translation l'une vers l'autre/à l'opposé l'une de l'autre dans la direction longitudinale (X-X) de manière à faire varier la distance inter-axiale entre les axes de distribution des têtes de formage; et
des moyens de connexion qui relient la source d'alimentation en matière plastique (310a) à l'entrée de la première tête (10A) et à l'entrée de la deuxième tête (10B) et qui sont configurés pour maintenir la connexion lors de la variation de la distance inter-axiale entre les têtes de formation (10A, 10B),
**caractérisé en ce que** les moyens de connexion comprennent :
un premier conduit (455) communiquant avec la source d'alimentation, en particulier avec l'entrée commune (310a), un premier joint compensateur (451) qui relie le premier conduit (455) à l'entrée de la première tête (10A) et est configuré pour se dilater/se rétracter lors de la variation de la distance inter-axiale entre les axes de distribution des têtes de formage, de manière à maintenir la connexion entre la source d'alimentation en matière plastique (310a) et l'entrée respective de la tête de formage (10A, 10B); et/ou
un deuxième conduit (455) communiquant avec la source d'alimentation, en particulier avec l'entrée commune (310a), un deuxième joint compensateur (452) qui relie le deuxième conduit (455) à l'entrée de la deuxième tête (10B) et est configuré pour se dilater/se rétracter lors de la variation de la distance inter-axiale entre les axes de distribution des têtes de formage, de manière à maintenir la connexion entre la source d'alimentation en matière plastique (310a) et l'entrée respective de la tête de formage (10A, 10B).

2. Groupe de formage selon la revendication 1, **caractérisé en ce qu'**il comprend un bloc de référence (310), qui est fixé pendant l'utilisation, en particulier au support (230), et qui est agencé entre les première et deuxième têtes de formage et comprend ladite source d'alimentation en matière plastique (310a), ledit premier conduit (455) pour fournir la matière et ledit deuxième conduit (455) pour fournir la matière.

3. Groupe de formage selon la revendication 2, **caractérisé en ce que** chaque joint compensateur (451, 452) est configuré pour se dilater/se rétracter lors de la variation de la position relative dans la direction longitudinale entre la tête de formage respective (10A, 10B) et le bloc de référence de manière à maintenir la connexion entre la source d'alimentation en matière plastique (310a) et l'entrée respective de la tête de formage (10A, 10B).

4. Groupe de formage selon la revendication précédente, dans lequel chaque joint compensateur (451) comprend un premier élément fixé au bloc de référence (310) et un deuxième élément agencé au niveau de l'entrée (322i) de la tête de formage et mobile avec celle-ci dans la direction longitudinale, l'un desdits premier et deuxième éléments comprenant un manchon (451a) et l'autre élément comprenant une douille (451c), le manchon étant couplé de manière coaxiale et de manière étanche avec la douille (451c) de manière à permettre un déplacement relatif entre ceux-ci tout en maintenant la connexion fluidique entre le bloc de référence (310) et l'entrée pour l'amenée de matière dans la tête de formage.

5. Groupe de formage selon la revendication précédente, dans lequel chaque manchon (451 a, 452a) a un épaulement annulaire respectif (451b, 452b) conçu pour créer un espace avec la douille respective (451c, 452c), ledit espace étant conçu pour être rempli de matière pour créer un joint pour éviter une fuite de matière hors du joint de compensateur (451, 452).

6. Groupe de formage selon l'une des revendications précédentes, **caractérisé en ce que** chaque tête de formage (10A, 10B) comprend un groupe d'alimentation respectif (200A; 200B), comprenant un bloc respectif (321; 322) qui a l'entrée respective pour la matière, en translation d'un seul tenant avec et reliée à une chambre de distribution (210) conçue pour fournir la matière plastique à l'ouverture de distribution respective de la tête de formage.

7. Groupe de formage selon l'une des revendications précédentes, **caractérisé en ce qu'**il comprend une première bride (211) et une deuxièmee bride (221) qui sont supportées sur un plan longitudinal/transversal du support fixe (230) de manière à permettre une translation relative des brides (211; 221) dans la direction longitudinale (X-X), et **en ce que** chacune desdites brides (211; 221) se déplace d'un seul tenant avec une tête de formage respective, en particulier avec un bloc respectif (321, 322) du groupe d'alimentation de la tête de formage.

8. Groupe de formage selon la revendication précédente, dans lequel le support fixe se présente sous la forme d'une plaque (230) présentant une cavité interne traversant dans la direction verticale, avec une surface de plaque supérieure qui définit ledit plan longitudinal/transversal, et dans lequel chaque bride (211, 221) a des coulisseaux reposant sur la plaque (230) et libres de se déplacer dans le plan longitudinal/transversal.

9. Groupe de formage selon l'une des revendications précédentes, **caractérisé en ce que** l'ensemble de déplacement comprend :
- des moyens de rotation entraînés (313, 314) couplés à la première tête de formage et à la deuxième tête de formage, en particulier aux premier et deuxième blocs (321, 322) des première et deuxième têtes, de telle sorte que le mouvement de rotation des moyens entraînés provoque un mouvement dans la direction longitudinale des têtes de formation (10A, 10B) par rapport au support fixe, vers/à l'opposé l'un de l'autre dans la direction longitudinale;
- un élément d'entraînement, constitué de préférence d'un engrenage d'entraînement (333), conçu pour être relié à un système d'entraînement pour générer un mouvement de rotation;
- un mécanisme de transmission (331, 332) pour transmettre le mouvement de l'élément d'entraînement au moyen entraîné.

10. Groupe de formage selon l'une des revendications précédentes, **caractérisé en ce que** lesdits moyens entraînés comprennent un premier arbre longitudinal (313) et un deuxième arbre longitudinal (314), les extrémités opposées (313a, 313b; 314a, 314b) de chaque arbre ayant un filetage respectif (315a, 315b) avec une direction de filetage opposée au filetage de l'autre extrémité, lesdits filetages étant conçus pour coopérer avec des filetages femelles respectifs fixés au premier bloc (321) et au deuxième bloc (322), de sorte que la rotation des arbres provoque une translation symétrique des première et deuxième têtes (10A, 10B), dans des sens opposés le long de la direction longitudinale.

11. Groupe de formage selon la revendication précédente, lorsqu'il dépend de la Revendication 3, dans lequel les arbres entraînés sont insérés à travers le bloc de référence (310) de manière à être axialement fixés mais autorisés à tourner par rapport à celui-ci; dans lequel, de préférence, les deux arbres entraînés sont agencés à l'opposé l'un de l'autre le long d'une diagonale du bloc de référence (310).

12. Groupe de formage selon la revendication précédente, dans lequel le mécanisme de transmission comprend un pignon respectif (331) monté sur une extrémité respective (313a, 314a) des arbres entraînés (313, 314) et un pignon de renvoi (332) qui s'engrène avec les pignons (331) et avec l'élément d'entraînement de manière à transmettre le mouvement de rotation de l'élément d'entraînement aux arbres entraînés et synchroniser la rotation des deux arbres entraînés (313, 314).

13. Groupe de formage selon l'une des revendications 9 à 12, dans lequel l'ensemble de déplacement comprend en outre des moyens de guidage (311, 312) pour guider le déplacement des têtes de formage (10A, 10B), en particulier des blocs (321; 322) des têtes de formage, comprenant de préférence une première barre de coulissement et de guidage (311) et une deuxièmee barre de coulissement et de guidage (312), fixées au bloc de référence (310) à partir desquelles elles font saillie dans les deux sens de la direction longitudinale; les extrémités opposées respectives (311a, 311b; 312a, 312b) de chaque barre de guidage (311, 312) étant insérées à l'intérieur de trous correspondants (321a, 321b; 322a, 322b) de la première tête, en particulier du premier bloc (321), et de la deuxième tête, en particulier du deuxième bloc (322), respectivement.

14. Groupe de formage selon l'une des revendications précédentes, dans lequel chaque tête de formage comprend un groupe de matrices respectif (100A, 100B), avec une matrice femelle respective (110, 120) qui définit l'ouverture de distribution, dans lequel un élément mâle est inséré de manière coaxiale à l'intérieur de chaque matrice (110, 120) et à travers l'ouverture de distribution de sorte que, en faisant varier une position relative dans la direction verticale entre la matrice (110, 120) et l'élément mâle, le passage de l'ouverture de distribution et par conséquent l'épaisseur de la paraison distribuée (1, 2) est ajustée.

15. Groupe de formage selon la revendication précédente, dans lequel un actionneur électrique respectif (400A, 400B) conçu pour effectuer un ajustement de l'épaisseur de la paraison de la tête de formage respective (10A, 10B) est supporté par la bride de support respective (211, 221) et agencé de manière à actionner de manière déplaçable dans la direction verticale soit l'élément mâle soit la matrice afin de faire varier le passage de l'ouverture de distribution.
